# EUROPEAN PATENT SPECIFICATION

(11) **EP 2 808 926 B1**
(45) Date of publication and mention of the grant of the patent: **18.07.2018**
(21) Application number: 14170134.2
(22) Date of filing: 27.05.2014
(51) Int. Cl.: H01M 2/20, H01M 2/22

(54) **Power unit for naval unit, in particular submarine unit**
Antriebseinheit für ein Wasserfahrzeug, insbesondere für ein Unterseeboot
Unité de puissance pour unité navale, en particulier une unité sous-marine

(30) Priority: 27.05.2013 IT TO20130424
(43) Date of publication of application: 03.12.2014
(73) Proprietor: LEONARDO S.p.A., 00195 Roma (IT)
(72) Inventor: Tevene', Bruno, 57127 Livorno (IT); Bianchi, Francesca, 57127 Livorno (IT); Melidoro, Enza, 57125 Livorno (IT)
(74) Representative: Bongiovanni, Simone

(56) References cited:
- WO-A1-2010/071464
- WO-A1-2010/076767
- US-A- 4 409 304
- US-A1- 2012 177 972
- US-A1- 2013 045 401
- US-A1- 2013 130 100

## Description

The present invention relates to an electric power unit for a naval vessel, in particular for a submarine vessel.

As is known, many submarine vessels, for example torpedoes, are propelled by high-power electric motors that absorb extremely high current (the peak current can be in the order of 0.5-1 KA) for a very short lapse of time, in the order of about ten to twenty minutes.

High energy density electric units, such as electrochemical batteries, are normally used to power these electric motors.

Electrochemical batteries generally comprise: a primary electrochemical battery in which a chamber houses an anhydrous electrolyte (for example, sodium hydroxide) and is provided with members for the controlled intake of a flow of water from the aquatic environment, to form, following execution of a water intake command, a liquid electrolyte, and members for the discharge of emissions into the aquatic environment, typically gases produced by the chemical reaction in the primary battery; the chamber houses a system for recirculating the fluid electrolyte through a plurality of electrochemical cells housed in the chamber using an electric pump; an auxiliary battery that can be activated by remote control for opening the controlled intake members and powering the electric pump so as to effect the formation and circulation of the electrolyte.

Batteries of the above-described type, as is evident from the outline description provided above, have an extremely complex structure, comprising mechanical and electrical members and members for ensuring the flow of water to and inside the chamber. The malfunctioning of one of these members can prevent, partially or completely, the battery from operating. In addition, the chemical reaction upon which the generation of electric power is based is violently exothermic; for this reason, the behaviour of electrochemical batteries is rather "delicate" and the various parameters (pressure/temperature) of the electrolyte in the chamber must be carefully monitored to prevent malfunctioning and/or potentially hazardous operation.

To solve the above-indicated problems, the use of lithium-ion polymer batteries, which are normally used in the automotive field for powering electric vehicles, has been proposed. However, these batteries individually provide current that is absolutely insufficient for powering the vessel's electric motor; it is therefore necessary to arrange a number of batteries in parallel, connecting the positive/negative terminals of the batteries together in order to have sufficient overall current.

Normally, lithium-ion polymer batteries of the pouch-cell type comprise a rectangular-shaped flat body that houses the electrochemical components of the battery and is equipped with a positive/negative electrode formed by metal blades (usually, respectively made of aluminium and copper, and with a rectangular shape) that extend along a side of the rectangular-shaped flat body.

The connection of multiple blade-shaped positive/negative electrodes together is an operation that entails a series of problems because the contact resistances between the output terminal of each individual battery in parallel and the load, although having a meagre value (for example, above 0.02 milliohm), are not, however, null; due to the large currents in play, these resistances can produce strong local heating of the blade electrodes (or parts thereof), damaging the battery assembly or making it intrinsically hazardous.

In fact, it can be useful to remember that the "chemistry" of these batteries is not as safe as that of other batteries in everyday use: a lithium-ion polymer battery can actually explode if overheated or excessively charged. A lithium-ion polymer battery requires various obligatory safety systems inside it (for example, a vent valve to control the internal pressure). US4409304 discloses a power unit comprising at least two flat cells connected in series. The object of the present invention is to provide an electric power unit for a naval vessel in which it is possible to safely arrange at least two lithium-ion polymer batteries in parallel.

The foregoing object is achieved by the present invention in so far as it relates to an electric power unit for a naval vessel, in particular a submarine vessel, comprising: **an** insulating casing suitable for housing a plurality of lithium-ion polymer batteries, each of which comprises a rectangular-shaped flat body that houses the electrochemical components of the battery and is provided with a negative/positive electrode formed by respective metal blades that extend along a side of the rectangular-shaped flat body, said batteries comprise: a first battery assembly, wherein at least a first battery and a second battery are provided and arranged with the respective flat bodies facing one another; a second battery assembly wherein at least a first battery and a second battery are provide and arranged with the respective flat bodies facing one another, the first and the second assembly being arranged in series one with the other; characterized by comprising mechanical and electrical interconnection means of the first and second battery assemblies comprising: a first flat metal conductor carried by said casing, the blade electrodes of the first batteries of the first and the second assembly being arranged with their lower face in contact with the opposite sides of the first metal conductor; a second metal conductor overlaying the first metal conductor and arranged in contact with an upper face of the blade electrodes of the first batteries of the first and the second assembly, the blade electrodes of the second batteries of the first and the second assembly being arranged with their lower face in contact with the opposite sides of the second metal conductor; a third metal conductor overlaying the first and the second conductor and arranged in contact with an upper face of the blade electrodes of the second batteries of the first and the second assembly; a clamping device able to apply a force to the layered structure formed by the first, second and third metal conductors and by the electrodes interposed between these metal conductors.

The invention will now be described with particular reference to the attached drawings, which illustrate a non-limitative embodiment, and where:
Figure 1 shows a perspective view of an electric power unit for a naval vessel made according to the present invention;
Figure 2 shows an exploded view of the unit in Figure 1;
Figure 3 shows a portion of the unit in Figure 2 on an enlarged scale; and

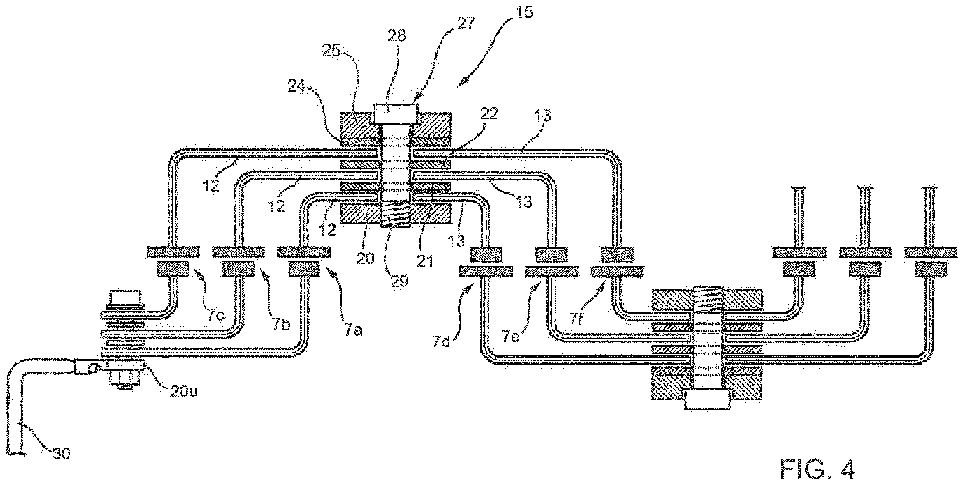

Figure 4 shows an equivalent electrical connection diagram of the unit in Figure 1.

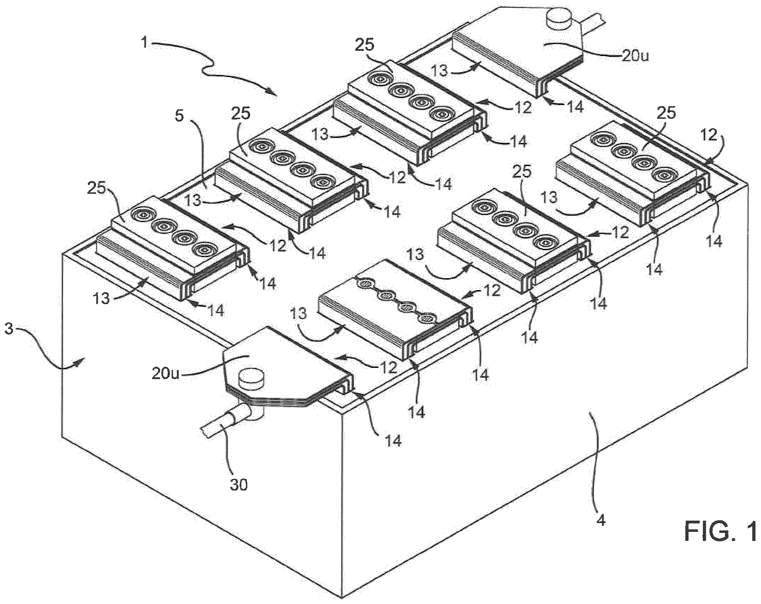

**In** **Figure 1**, **reference numeral 1 indicates**, as a whole, an electric power unit for a naval vessel, in particular a submarine vessel (torpedo).

The unit 1 comprises an insulating casing 3 comprising a reclosable cup-shaped body 4 with a flat insulating lid 5 and suitable for housing a plurality of lithium-ion polymer batteries 7.

Each battery 7 (of known type) comprises a rectangular-shaped flat body 11 that houses the electrochemical components of the battery and is provided with a negative/positive electrode 12 and 13 formed by respective metal blades (usually, respectively made of aluminium and copper) that extend along a side of the rectangular-shaped flat body 11.

A plurality of battery assemblies 7 (for example nine assemblies) arranged in series are housed inside the cup-shaped body 4; furthermore, each assembly comprises (for example, three) batteries arranged in parallel with each other.

The flat insulating lid 5 has a plurality of slots 14 (Figure 1) to allow the positive/negative electrodes 12 and 13 to protrude from the casing 3.

In the following example, two battery assemblies arranged in series will be illustrated, each battery assembly 7 being formed by three batteries arranged in parallel with each other.

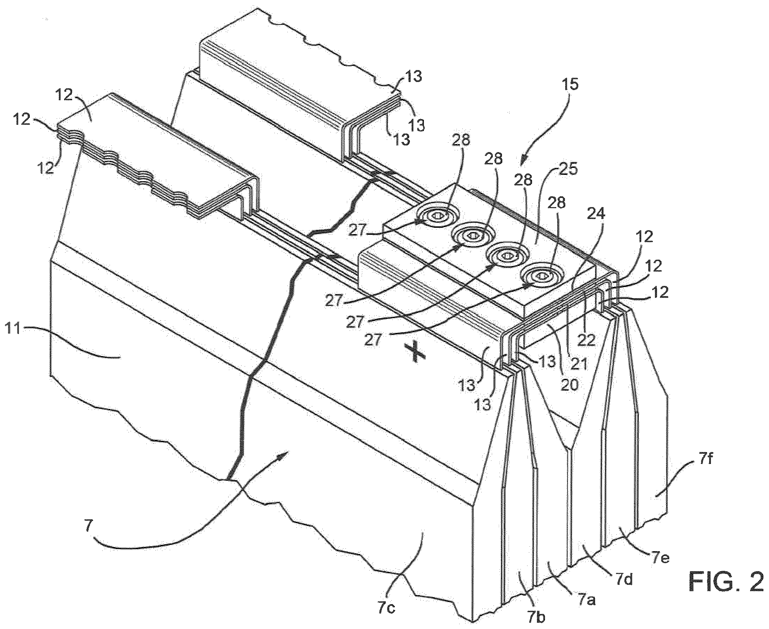

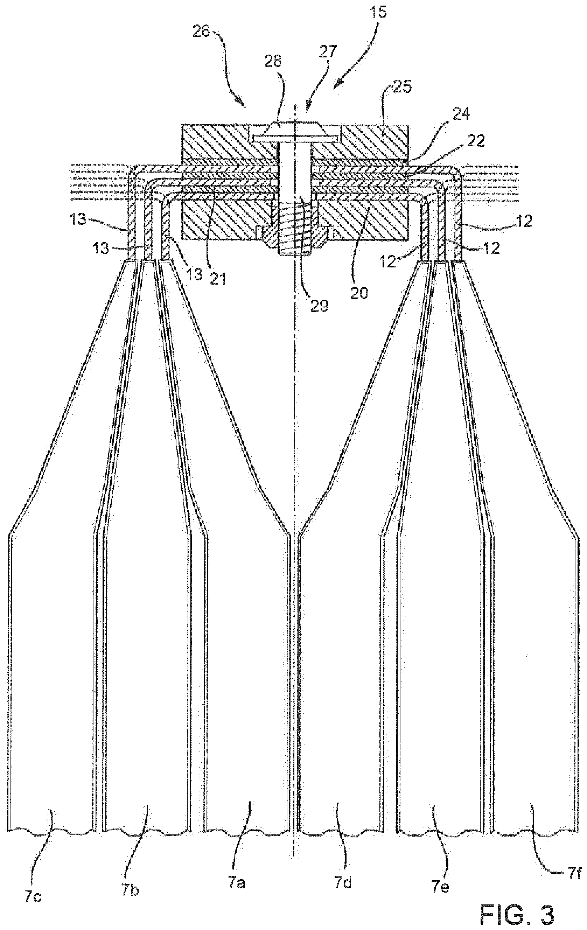

According to this example, the following are provided:
a first battery assembly wherein a first battery 7-a, a second battery 7-b and a third battery 7-c are provided and arranged with the respective flat bodies 11 facing one another so as to create a compact battery pack;
a second battery assembly wherein a first battery 7-d, a second battery 7-e and a third battery 7-f are provided and also arranged with the respective flat bodies 11 facing one another so as to create a compact battery pack;
an electrical and mechanical interconnection device 15 (Figures 2 and 3) for the first and the second battery assembly comprising:
   a first flat rectangular metal conductor element 20 arranged on an external surface of the lid 5 of the casing 3; the first flat metal conductor element is formed by a silver-coated copper plate; respective slots 14 (Figure 1) extend along the longer sides of the flat metal conductor 20.

The blade electrodes 12 and 13 of the first batteries 7-a and 7-d of the first and the second assembly engage respective slots 14 and are arranged folded, with their lower face in contact with the opposite sides of the first flat metal conductor element 20;
a second flat rectangular metal conductor element 21 (the second flat metal conductor element is formed by a silver-coated copper plate) overlaying the first flat conductor element 20 and arranged in contact with an upper face of the blade electrodes 12 and 13 of the first batteries 7-a and 7-d of the first and the second assembly;
the blade electrodes 12 and 13 of the second batteries 7-b and 7-e of the first and the second assembly engage respective slots 14 and are arranged folded, to make contact with the opposite sides of the second flat metal conductor element 21;
a third flat rectangular metal conductor element 22 (the third flat metal conductor element is formed by a silver-coated copper plate) overlaying the first and second flat conductor elements 20 and 21 and arranged in contact with an upper face of the blade electrodes 12 and 13 of the second batteries 7-b and 7-e of the first and the second assembly;
the blade electrodes of the third batteries 7-c and 7-f of the first and the second assembly engage respective slots 14 and are arranged folded, with their lower face in contact with the opposite sides of the third flat metal conductor element 22;
a fourth flat rectangular metal conductor element 24 (the fourth flat metal conductor element is formed by a silver-coated copper plate) overlaying the first, second and third flat elements and arranged in contact with an upper face of the blade electrodes of the third batteries 7-c and 7-f of the first and the second assembly; and
a fifth flat metal conductor element 25 overlaying the fourth conductor element 24 and formed by a plate of anodized aluminium.

A clamping device 26 is provide that is suitable for applying a force to the layered structure formed by the first, second, third, fourth and fifth flat metal conductor elements and by the electrodes 12 and 13 interposed between these elements.

The clamping device is configured to ensure absolute coplanarity of the flat metal conductor elements of the layered structure and of the blade electrodes 12 and 13 folded and interposed between pairs of flat elements 20-24.

The clamping device 26 comprises a plurality of screws 27, each of which comprises a head 28 suitable to abut against the outermost flat metal conductor element of the layered structure (in the example, the fifth conductor element 25) and a shank 29 suitable for being screwed into a threaded hole of the first metal conductor element 20; the intermediate elements of the layered structure (in the example, the second, third, fourth and fifth elements) are provided with through holes for the passage of the screws 27.

The conductor elements of the first and the second assembly not forming part of the series can be connected to one another with an interconnection device similar to that shown and comprising a layered structure provided with a first conductor element 20-u, an electrode of a first battery that engages a slot 14 and is folded onto the first conductor, a second conductor element overlaying the first, an electrode of a second battery that engages the slot 14 and is folded onto the second conductor, a third conductor element overlaying the second, an electrode of a third battery that engages the slot 14 and is folded onto the third conductor, a fourth conductor element that presses on the electrode of the third battery and a fifth conductor element that faces the fourth element and ensures the stability of the layered structure thanks to the presence of the screws.

The conductor 20-u can be connected to a power supply cable 30 for supplying electric power to the motor of the vessel.

Based on tests carried out by the applicant, the above-described unit ensures:
- low contact resistance between the electrodes of batteries arranged in parallel with each other and between battery assemblies arranged in series;
- good thermal behaviour (losses due to the Joule effect drop significantly because of the low contact resistance);
- good mechanical connection between the parts even in the presence of stress (vibration, for example).

It may be noted that, the flat elements 20 and 25 could also be made of non-conductive material, as the low contact resistance is guaranteed by the conductor elements 21, 22 and 24 that provide a direct current passage between the electrodes of the battery.

## Claims

1. An electric power unit for a naval vessel, in particular a submarine vessel comprising:
an insulating casing (3) suitable for housing a plurality of lithium-ion polymer batteries (7), each of which comprises a rectangular-shaped flat body (11) that houses the electrochemical components of the battery and is provided with a negative/positive electrode (12 and 13) formed by respective metal blades that extend along a side of the rectangular-shaped flat body, said batteries comprise:
a first battery assembly wherein at least a first battery (7-a) and a second battery (7-b) are provided and arranged with the respective flat bodies (11) facing one another;
a second battery assembly wherein at least a first battery (7-d) and a second battery (7-e) are provided and arranged with the respective flat bodies facing one another;
the first and the second assembly being arranged in series one with the other;
**characterized by** comprising mechanical and electrical interconnection means (15) of the first and second battery assemblies comprising:
a first flat element (20) carried by said casing (5), the blade electrodes of the first batteries (7-a; 7 d) of the first and the second assembly being arranged with their lower face in contact with the opposite sides of the first flat element (20);
a second flat conductor element (21) overlaying the first flat element (20) and arranged in contact with an upper face of the blade electrodes (12 and 13) of the first batteries of the first and the second assembly;
the blade electrodes (12 and 13) of the second batteries (7-b; 7 e) of the first and the second assembly being arranged with their lower face in contact with the opposite sides of the second flat conductor element (21);
a third flat conductor element (22) overlaying the first and the second element and arranged in contact with an upper face of the blade electrodes (12 and 13) of the second batteries (7-d; 7 e) of the first and the second assembly;
a clamping device (26) able to apply a force to the layered structure formed by the first, second and third flat elements and by the electrodes interposed between the metal conductors.

2. The unit according to claim 1, wherein each first/second assembly comprises a third battery (7-c; 7-f) arranged with its own flat body facing the flat body of the second battery; the blade electrodes (12 and 13) of the third batteries of the first and the second assembly being arranged with their lower face in contact with opposite sides of the third flat conductor element (22);
a fourth flat conductor element (24) overlaying the first, second and third conductors and arranged in contact with an upper face of the blade electrodes (12 and 13) of the third batteries of the first and the second assembly;
said clamping device being able to apply a force to the layered structure formed by the first, second, third and fourth flat elements and by the electrodes interposed between the flat elements.

3. The unit according to claim 1, wherein a fifth flat element (25) is provided overlaying the fourth flat element; said clamping device being able to apply a force to the layered structure formed by the first, second, third, fourth and fifth flat elements and by the electrodes interposed between the flat elements.

4. The unit according to claim 3, wherein the first, second, third and fourth elements are made from copper plates coated with silver, the fifth flat element being made of anodized aluminium.

5. The unit according to any of the preceding claims, wherein the clamping device comprises a plurality of screws (27), each of which comprises a head (28) suitable to abut against the outermost flat element (24) of the layered structure and a shank suitable for being screwed into a threaded hole of the first flat element (20), the intermediate flat elements of the layered structure being provided with through holes for the passage of said screws.

6. The unit according to any of the preceding claims, wherein the first, second and third flat elements have a rectangular shape in plan.

7. The unit according to any of the preceding claims, wherein the insulating casing (3) comprises a reclosable cup-shaped body (4) with a flat insulating lid (5) and is suitable for housing the lithium-ion polymer batteries (7); respective slots (14) extend along the longer sides of the first flat metal conductor (20) in order to allow the passage of the electrodes.

## Patentansprüche

1. Elektrische Leistungseinheit für ein Seefahrzeug, insbesondere ein Unterseefahrzeug, die Folgendes umfasst:
ein isolierendes Gehäuse (3), das geeignet ist, mehrere Lithium-Ionen-Polymerbatterien (7) aufzunehmen, von denen jede einen rechteckförmigen, flachen Körper (11) umfasst, der die elektrochemischen Komponenten der Batterie aufnimmt und mit einer negativen/positiven Elektrode (12 und 13), die durch entsprechende Metallblätter, die entlang einer Seite des rechteckförmigen, flachen Körpers verlaufen, gebildet sind, versehen ist,
wobei die Batterien Folgendes umfassen:
eine erste Batterieanordnung, in der mindestens eine erste Batterie (7-a) und eine zweite Batterie (7-b) vorgesehen und mit den entsprechenden flachen Körpern (11) einander zugewandt angeordnet sind; und
eine zweite Batterieanordnung, in der mindestens eine erste Batterie (7-d) und eine zweite Batterie (7-e) vorgesehen und mit den entsprechenden flachen Körpern einander zugewandt angeordnet sind;
wobei die erste und die zweite Batterieanordnung in Reihe angeordnet sind;
**dadurch gekennzeichnet, dass** sie mechanische und elektrische Verbindungsmittel (15) der ersten und zweiten Batterieanordnungen umfasst, die Folgendes umfassen:
ein erstes flaches Element (20), das durch das Gehäuse (5) getragen wird, wobei die Blattelektroden der ersten Batterien (7-a; 7-d) der ersten und der zweiten Anordnung mit ihren Unterseiten in Kontakt mit den gegenüberliegenden Seiten des ersten flachen Elements (20) angeordnet sind;
ein zweites flaches Leiterelement (21), das das erste flache Element (20) überlagert und in Kontakt mit einer Oberseite der Blattelektroden (12 und 13) der ersten Batterien der ersten und der zweiten Anordnung ausgelegt ist;
wobei die Blattelektroden (12 und 13) der zweiten Batterien (7-b; 7-e) der ersten und der zweiten Anordnung mit ihren Unterseiten in Kontakt mit den gegenüberliegenden Seiten des zweiten flachen Leiterelements (21) ausgelegt sind;
ein drittes flaches Leiterelement (22), das das erste und das zweite Element überlagert und in Kontakt mit einer Oberseite der Blattelektroden (12 und 13) der zweiten Batterien (7-d; 7-e) der ersten und der zweiten Anordnung angeordnet ist; und
eine Klemmeinrichtung (26), die in der Lage ist, eine Kraft auf die geschichtete Struktur, die durch das erste, das zweite und das dritte flache Element und durch die zwischen den Metallleitern angeordneten Elektroden gebildet ist, auszuüben.

2. Einheit nach Anspruch 1, wobei die erste und die zweite Anordnung jeweils eine dritte Batterie (7-c; 7-f), die mit ihrem flachen Körper dem flachen Körper der zweiten Batterie zugewandt ist, umfassen; wobei
die Blattelektroden (12 und 13) der dritten Batterien der ersten und der zweiten Anordnung mit ihren Unterseiten in Kontakt mit gegenüberliegenden Seiten des dritten flachen Leiterelements (22) angeordnet sind;
ein viertes flaches Leiterelement (24), das den ersten, den zweiten und den dritten Leiter überlagert und in Kontakt mit einer Oberseite der Blattelektroden (12 und 13) der dritten Batterien der ersten und der zweiten Anordnung angeordnet ist;
die Klemmeinrichtung in der Lage ist, eine Kraft auf die geschichtete Struktur, die durch das erste, das zweite, das dritte und das vierte flache Element und durch die zwischen den flachen Elementen angeordneten Elektroden gebildet ist, auszuüben.

3. Einheit nach Anspruch 1, wobei ein fünftes flaches Element (25) das vierte flache Element überlagernd vorgesehen ist;
wobei die Klemmeinrichtung in der Lage ist, eine Kraft auf die geschichtete Struktur, die durch das erste, das zweite, das dritte, das vierte und das fünfte flache Element und durch die zwischen den flachen Elementen angeordneten Elektroden gebildet ist, auszuüben.

4. Einheit nach Anspruch 3, wobei das erste, das zweite, das dritte und das vierte Element aus mit Silber beschichteten Kupferplatten hergestellt sind und das fünfte flache Element aus eloxiertem Aluminium hergestellt ist.

5. Einheit nach einem der vorhergehenden Ansprüche, wobei die Klemmeinrichtung mehrere Schrauben (27) umfasst, von denen jede einen Kopf (28), der geeignet ist, an dem äußersten flachen Element (24) der geschichteten Struktur anzuliegen, und einen Schaft, der geeignet ist, in eine Gewindeöffnung des ersten flachen Elements (20) geschraubt zu werden, umfasst, wobei die flachen Zwischenelemente der geschichteten Struktur mit Durchgangsöffnungen für den Durchgang der Schrauben versehen sind.

6. Einheit nach einem der vorhergehenden Ansprüche, wobei das erste, das zweite und das dritte flache Element in einer Draufsicht eine rechtwinklige Form besitzen.

7. Einheit nach einem der vorhergehenden Ansprüche, wobei das isolierende Gehäuse (3) einen wiederverschließbaren, schalenförmigen Körper (4) mit einem flachen isolierenden Deckel (5) umfasst und geeignet ist, die Lithium-Ionen-Polymerbatterien (7) aufzunehmen; und entsprechende Schlitze (14) entlang der längeren Seiten des ersten flachen Metallleiters (20) verlaufen, um den Durchgang der Elektroden zu ermöglichen.

## Revendications

1. Unité d'alimentation électrique pour un vaisseau naval, en particulier un vaisseau sous-marin, comprenant :
un boîtier isolant (3) approprié pour renfermer une pluralité de batteries polymères lithium-ions (7), dont chacune comprend un corps plat de forme rectangulaire (11) qui renferme les composants électrochimiques de la batterie et qui est muni d'une électrode négative/positive (12 et 13) formée par des lames métalliques respectives qui s'étendent le long d'un côté du corps plat de forme rectangulaire,
lesdites batteries comprenant :
un premier ensemble de batteries dans lequel au moins une première batterie (7-a) et une deuxième batterie (7-b) sont disposées et agencées avec les corps plats respectifs (11) se faisant mutuellement face ;
un deuxième ensemble de batteries dans lequel au moins une première batterie (7-d) et une deuxième batterie (7-e) sont disposées et agencées avec les corps plats respectifs se faisant mutuellement face ;
le premier et le deuxième ensembles étant disposés en série l'un par rapport à l'autre ;
**caractérisée en ce qu'**elle comprend des moyens d'interconnexion mécaniques et électriques (15) des premier et deuxième ensembles de batteries, comprenant :
un premier élément plat (20) porté par ledit boîtier (5), les électrodes à lame des premières batteries (7-a ; 7-d) du premier et du deuxième ensembles étant disposées avec leur face inférieure en contact avec les côtés opposés du premier élément plat (20) ;
un deuxième élément conducteur plat (21) superposé au premier élément plat (20) et disposé en contact avec une face supérieure des électrodes à lame (12 et 13) des premières batteries du premier et du deuxième ensembles ;
les électrodes à lame (12 et 13) des deuxièmes batteries (7-b ; 7-e) du premier et du deuxième ensembles étant disposées avec leur face inférieure en contact avec les côtés opposés du deuxième élément conducteur plat (21) ;
un troisième élément conducteur plat (22) superposé au premier et au deuxième éléments et disposé en contact avec une face supérieure des électrodes à lame (12 et 13) des deuxièmes batteries (7-d ; 7-e) du premier et du deuxième ensembles ;
un dispositif de serrage (26) susceptible d'appliquer une force à la structure en couches constituée par les premier, deuxième et troisième éléments plats et par les électrodes interposées entre les conducteurs métalliques.

2. Unité selon la revendication 1, dans laquelle chaque premier/deuxième ensemble comprend une troisième batterie (7-c ; 7-f) disposée avec son propre corps plat qui fait face au corps plat de la deuxième batterie ;
les électrodes à lame (12 et 13) des troisièmes batteries du premier et du deuxième ensembles étant disposées avec leur face inférieure en contact avec des côtés opposés du troisième élément conducteur plat (22) ;
un quatrième élément conducteur plat (24) superposé aux premier, deuxième et troisième conducteurs et disposé en contact avec une face supérieure des électrodes à lame (12 et 13) des troisièmes batteries du premier et du deuxième ensembles ;
ledit dispositif de serrage étant susceptible d'appliquer une force à la structure en couches constituée par les premier, deuxième, troisième et quatrième éléments plats et par les électrodes interposées entre les éléments plats.

3. Unité selon la revendication 1, dans laquelle un cinquième élément plat (25) est disposé de façon à être superposé au quatrième élément plat ;
ledit dispositif de serrage étant susceptible d'appliquer une force à la structure en couches constituée par les premier, deuxième, troisième, quatrième et cinquième éléments plats et par les électrodes interposées entre les éléments plats.

4. Unité selon la revendication 3, dans laquelle les premier, deuxième, troisième et quatrième éléments sont réalisées à partir de plaques de cuivre revêtues d'argent, le cinquième élément plat étant constitué par de l'aluminium anodisé.

5. Unité selon l'une quelconque des revendications précédentes, dans laquelle le dispositif de serrage comprend une pluralité de vis (27), dont chacune comprend une tête (28) appropriée pour buter contre l'élément plat situé le plus à l'extérieur (24) de la structure en couches et une tige appropriée pour être vissée dans un trou fileté du premier élément plat (20), les éléments plats intermédiaires de la structure en couches étant munis de trous traversants pour le passage desdites vis.

6. Unité selon l'une quelconque des revendications précédentes, dans laquelle les premier, deuxième et troisième éléments plats ont une forme rectangulaire en plan.

7. Unité selon l'une quelconque des revendications précédentes, dans laquelle le boîtier isolant (3) comprend un corps en forme de coupelle refermable (4) avec un couvercle isolant plat (5), et est approprié pour renfermer les batteries polymères lithium-ions (7) ; des encoches respectives (14) s'étendant le long des longueurs du premier conducteur métallique plat (20) de façon à permettre le passage des électrodes.
